# EUROPEAN PATENT APPLICATION

(11) **EP 1 274 234 A2**
(43) Date of publication of application: **08.01.2003**
(21) Application number: 02014054.7
(22) Date of filing: 28.06.2002
(51) Int. Cl.: H04N 5/445

(54) **Apparatus and method for displaying electronic program guide**

(30) Priority: 28.06.2001 JP 2001197303
(71) Applicant: Pioneer Corporation, Tokyo-to (JP)
(72) Inventor: Inoue, Tatsu, Pioneer Corporation Ohmori Works, Tokyo (JP)
(74) Representative: Klingseisen, Franz, Dipl.-Ing.

(57) **Abstract**

An electronic program guide (EPG) apparatus comprises has a program information acquiring device (17), a storing device (16), and a display device (9,22). The program information acquiring device acquires program information about the plurality of programs. The storing device stores coordinates of a plurality of program-table sections formed by dividing a program-table display area in accordance with positions of a plurality of operation keys arranged on an operation device (12). When any of the operation keys is operated, the display device makes reference to the coordinates stored in the storing device to display a certain program-table section selected from the plurality of program-table sections in response to coordinates of a certain program-table display area corresponding to the operated operation key. With easier operations, a desired program can be searched quickly.

## Description

### BACKGROUND OF THE INVENTION

### (Field of the Invention)

The present invention relates to an apparatus and method for displaying an electronic program guide (EPG) on a TV display.

### (Description of Related Art)

In recent years, digital broadcasting systems have been spotlighted. The digital broadcasting systems transmit digitized television signals via satellites, such as broadcasting satellites and communication satellites, for reception by viewers so that they can watch television programs at home. A broadcasting system of this type can provide so many channels that a multitude of programs can be aired.

Such a broadcasting system transmits, from a satellite to a receiver at each viewer's home, information about an electronic program guide (EPG) indicative of contents of these many programs together with their video/audio data. At home, a user operates the receiver to display the EPG on a TV display, and searches for a user's desired program. To perform such an operation, it is usual that the user operates a remote control, which is also a part of the receiver.

However, it takes relatively much time and operational labor for a user to search for a user's desired program, because a digital broadcasting system usually provides a multitude of channels well over 100 channels. It is therefore required that an EPG to be displayed be easier to search for user's desired programs.

### SUMMARY OF THE INVENTION

The present invention has been made in view of these circumstances, and an object of the present invention is, therefore, to provide an apparatus and a method for displaying an electronic program guide, which allows a user to quickly search for a user's desired program, with simplified user's operations still maintained.

In order to achieve the above object, as one aspect, the present invention provides an apparatus for displaying an electronic program guide, in which information about a plurality of programs is displayed as a program table having both a time axis and a channel axis along which the information is mapped two-dimensionally. The apparatus comprises a program information acquiring device (17) for acquiring program information including at least information about program names, start time instants, program lengths or end time instants, broadcast channels, and broadcast days of the plurality of programs; a storing device (17, 16) for storing therein coordinates of a plurality of program-table sections (61) formed by dividing a program-table display area (32) in accordance with positions of a plurality of operation keys (53) arranged on an operation device (12) to operate a receiver (1) ; and a display device (17, 9, 22) for displaying, when a certain one of the operation keys (53) is operated, a certain program-table section selected from the plurality of program-table sections (61) in response to coordinates of a certain program-table display area corresponding to the certain operation key by making reference to the coordinates stored in the storing device (17, 16).

Accordingly, when any of the operation keys is operated, the coordinates stored in the storing device is examined so that a particular program-table section within the program-table display area is selected and displayed in response to the operated key. This way allows a user to selectively operate a desired operation key from a plurality of operation keys. It is therefore possible for the user to efficiently search for a desired program from a program table in which many programs are mapped.

Preferably, the operation device (12) is a remote control and the operation keys (53) are numeral keys. Thus, a user is able to use the remote control to select a desired program in an easier manner.

Still preferably, the display device (17, 9, 22) is configured to include the numeral keys of which relative arrangement order on the remote control agrees with a relative arrangement order of coordinate positions of the divided program-table sections (61). Since both of the arrangement order of the ten keys on the remote control and that of the program-table sections are made to agree with each other, a user is able to visually and easily recognize the one-to-one correspondence between the ten keys and the program-table sections. This greatly improves the maneuverability for selecting a desired program.

It is also preferred that the display device (17, 9, 22) is configured to develop and display in sequence a certain program-table section located at coordinates of a certain program-table display area corresponding to a certain numeral key whatever the certain numeral key is pressed. This configuration enables a program table (i.e., program-table section) to be displayed in sequence in a developed manner every time a user pushes a desired numeral key. Therefore a user is able to efficiently search for a desired program from the program table, even when a great deal of programs are mapped in the table.

Still, it is preferred that the display device (17, 9, 22) is configured to display in advance information about at least the broadcast day or start time instant and a broadcast channel of a certain program-table section to be displayed next, in cases where the program-table sections (61) are developed and displayed in sequence. Because information about a program-table section to be displayed next is provided beforehand in developing program-table sections, a user can perform a steady display of the next program-table section.

By way of example, preferably, the display device (17, 9, 22) is configured to distinguishably display, on the program-table display area, a certain program-table section to be displayed next, in cases where the program-table sections (61) are developed and displayed in sequence. This allows a user to securely recognize a program-table section to be displayed next.

Still preferably, the numbers of the numeral keys corresponding to the arrangement order of the program-table sections (61) are displayed in the program-table display area (32). Hence a user is able to find, with ease, the program-table section currently displayed.

As another aspect, the present invention provides a method of displaying an electronic program guide, in which information about a plurality of programs is displayed as a program table having both a time axis and a channel axis along which the information is mapped two-dimensionally. The method comprises the steps of acquiring program information including at least information about program names, start time instants, program lengths or end time instants, broadcast channels, and broadcast days of the plurality of programs; preserving coordinates of a plurality of program-table sections (61) formed by dividing a program-table display area (32) in accordance with positions of a plurality of operation keys (53) arranged on an operation device (12) to operate a receiver (1) ; and displaying, when a certain one of the operation keys (53) is operated, a certain program-table section selected from the plurality of program-table sections (61) in response to coordinates of a certain program-table display area corresponding to the certain operation key by making reference to the coordinates preserved.

This way also allows a user to selectively operate a desired operation key from a plurality of operation keys. It is therefore possible for the user to efficiently search for a desired program from a program table in which many programs are mapped.

### BRIEF DESCRIPTION OF THE DRAWINGS

In the accompanying drawings:
FIG. 1 is a block diagram showing the configuration of a satellite digital broadcast receiver according to an embodiment of the present invention;
FIG. 2 shows an operation about data transmission carried out for digital broadcast;
FIG. 3 exemplifies an EPG-displayed screen of a TV display;
FIG. 4 pictorially shows a conceptual structure of EPG-display data;
FIG. 5 shows the appearance of a remote control used together with the receiver shown in FIG. 1;
FIG. 6 exemplifies a monitor screen representing an area-display EPG;
FIG. 7 is a flowchart indicative of display processing required for an area-display EPG;
FIG. 8 is a further flowchart indicative of display processing required for an area-display EPG; and
FIG. 9 shows an example of the monitor screen representing a further area-display EPG.

### DETAILED DESCRIPTION OF THE PREFERRED EMBODIMENTS

The present invention will now be described with reference to preferred embodiments.

### (1) Configuration of receiver

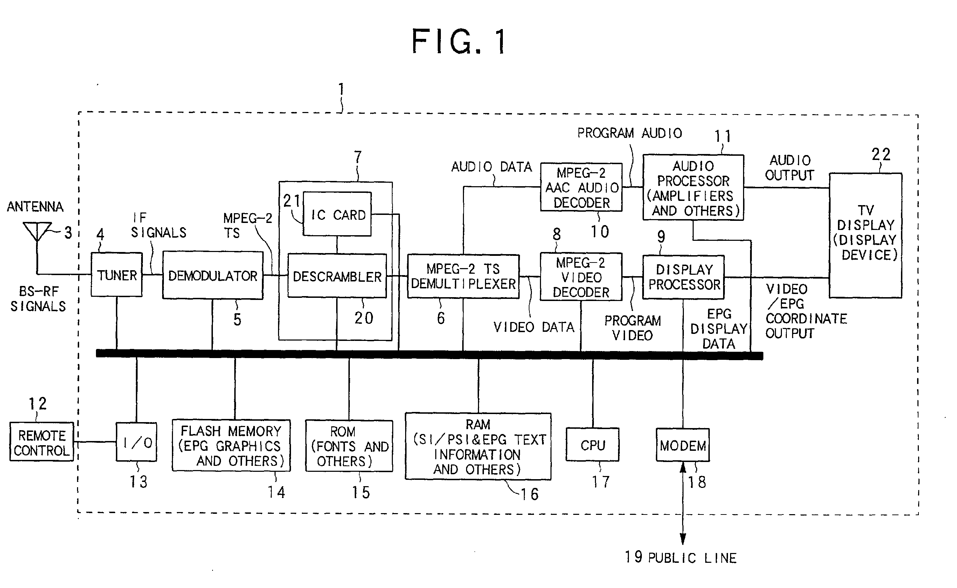

FIG. 1 shows the configuration of a satellite digital broadcast receiver 1 according to an embodiment of the present invention. The satellite digital broadcast receiver 1 shown in FIG. 1, installed in the home of a viewer, is able to receive digital broadcast signals (broadcast waves) from a satellite to display television (TV) programs on the screen of the viewer's home TV. The receiver 1 is also able to receive information about an electronic program guide (EPG) sent from the satellite, and to display the information on the TV screen in replay to instructions from the viewer.

As shown in FIG. 1, the receiver 1 has various components connected to a bus 2. In addition, the receiver 1 can be operated by a remote control 12 attached thereto as an operation device.

The broadcast waves (BS-RF signals) transmitted from the satellite are received by an antenna 3, and then sent to a tuner 4 placed within the receiver 1. The broadcast waves include TV video/audio information (hereinafter referred to as "TV program information"), and SI or "service information (i.e., information to map programs)" used to display the EPG. The tuner 4 tunes to a user-selected reception band, and converts the received signal waves to intermediate frequency (IF) signals, before being applied to a demodulator 5. The demodulator 5 demodulates the inputted digital signals, subjects the demodulated signals to data frame reformatting, error correction and other processes, and supplies the resultant signals to a demultiplexer 6 in an MPEG-2 transport stream (TS) format through a descrambler 20.

The demultiplexer 6 separates audio and video data according to a specified service from the inputted MPEG-2 TS format data, and then supplies the audio and video data to an audio decoder 10 and a video decoder 8, respectively. The audio data is coded in an MPEG-2 AAC format and the video data in an MPEG-2 video format. The audio decoder 10 decodes the inputted audio data to generate program audio data for application to an audio processor 11. The processor 11, including amplifiers, performs predetermined audio signal processing on the applied audio data so as to create an audio output.

On the other hand, the video decoder 8 decodes the inputted video data to generate program video data for application to a display processor 9. This processor 9 is capable of subjecting the inputted program video data to predetermined processing to create a video output. The display processor 9 is also capable of superimposing various type of information, such as textual information, on program images to be displayed on the screen of a TV display 22. EPG display data and coordinate data, both are to be described below, are superimposed on or replaced with the program video data by the display processor 9, for output to the TV display 22 serving as part of the display device of the present invention.

The demultiplexer 6 extracts control data including SI from the inputted MPEG-2 TS data. The SI provides the basis for both of the EPG display data and the coordinate data, and is thus utilized for EPG display processing and area display processing. The control data including the SI, which are separated by the demultiplexer 6, are stored into a RAM 16 serving as the storing device of the present invention under the control of a CPU 17. The CPU 17 is able to operate as part of the program information acquisition device according to the present invention , which acquires program information including pieces of information about at least program names, start time instants, program lengths or end time instants, broadcast channels, and broadcast dates of a plurality of programs.

The RAM 16 also stores EPG text data for display of the EPG. The RAM 16 further stores, as database, coordinate data of each of plural program-table sections divided in a program-table grid correspondingly to each arrangement position of a plurality of numeral keys functioning as a plurality of operation keys embedded on a remote control 12 used to operate the receiver 1. A flash memory 14 stores various graphic data (program-table grids and predetermined markings such as logotypes of broadcast channels) needed for EPG display, while a ROM 15 stores data that includes font data for use as EPG text data.

A conditional access processor 7 performs the following processing. Conditional accesses, which are available only to those who have made a subscription contract with a broadcasting business, provide information on a service or program basis, and the relevant encrypted MPEG-2 TS data are transmitted to the subscribers. The conditional access processor 7 is comprised of a descrambler 20 serving as decryption processor and an IC card 21 in which contract information is recorded for determination whether a program is to be viewed or not. A service center jointly operated by broadcasting businesses sends an IC card 21 to each subscribing user. The contract information recorded in each IC card 21 is defined by subscription terms between each user and each broadcasting business, and generally differs from one user to another. In response to a user's selection of a conditional access program, the conditional access processor 7 decrypts the MPEG-2 TS data on the basis of both the user's subscription terms and the decryption-related information obtained from the broadcast waves. If the user is a subscriber to this service, the user is therefore able to view the selected conditional access program. If the user is not a subscriber, however, the MPEG-2 TS data are not subjected to decryption, so that the user cannot view the program.

For pay-per-view programs, purchases are recorded into the IC card 21 every time the user purchases a program, and the user's pay-per-view program purchase information is periodically transmitted from the receiver 1 to a program distributor via a modem 18 and a public network 19.

Instructions inputted by the user with the use of the remote control 12 are transferred to the CPU 17 via an interface 13. The CPU 17, which has recognized the user's instructions, responds to control the components of the receiver 1. For example, the CPU 17 commands the tuner 4 to tune to a user-designated channel frequency.

For displaying EPG data, the CPU 17 prepares for not only EPG text data by referencing the SI stored in the RAM 16 but also each set of coordinate data of program-table sections divided in a program-table grid in agreement with the positions of the numeral keys on the remote control 12. The CPU 17 then prepares for EPG display data by using the graphic data such as the grid data for the program tables stored in the flash memory 14, the font data stored in the ROM 15, the EPG text data stored in the RAM 16, and the prepared set of coordinate data of the program-table sections. The prepared EPG display data are supplied to the display processor 9. In response to a switching command coming from the CPU 17, the processor 9 performs either switchovers between program video data from the video decoder 8 and the EPG display data, or superimposition of both the EPG display data and the coordinate data upon the program video data, thereby providing video signals. The video signals are then outputted to the TV display 22.

Further, the public network 19 is connected to the bus 2 through the modem 18 to which a user's telephone or personal computer is connected communicably, so that necessary communication between broadcast stations and the user's home can be performed.

### (2) Signal format

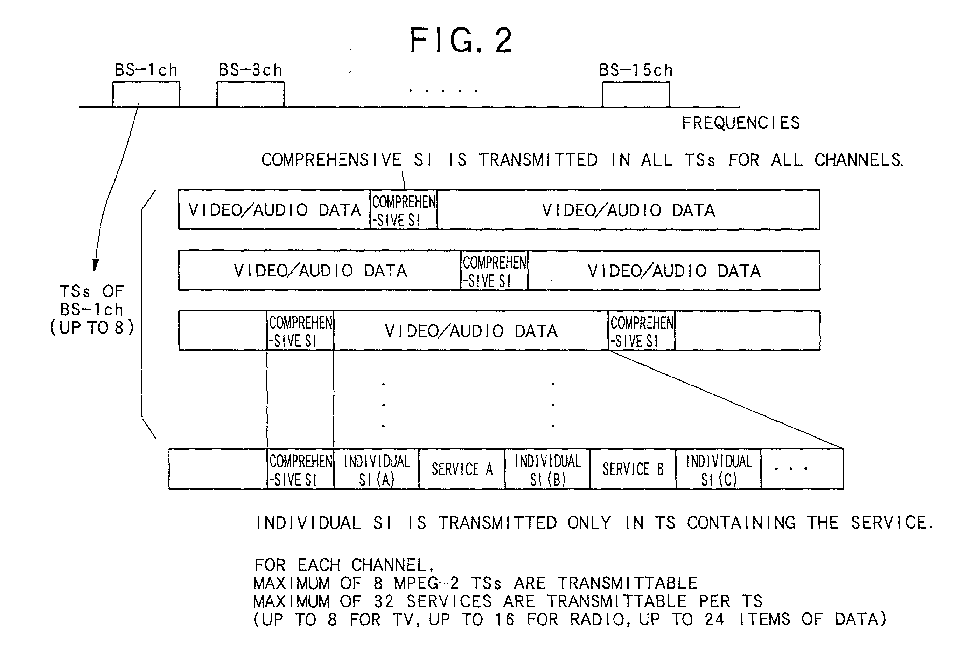

Digital signals transmitted from a satellite, which will become original data for the EPG display, will now be described. FIG. 2 schematically shows a data format for digital signals. As shown in the figure, a satellite digital broadcasting system provides multiple BS channels (bands), in which each BS channel transmits eight MPEG-2 TSs at most and each TS is able to transmit thirty-two services at most. In the following description, the term "BS channel" is used to mean a frequency band in satellite broadcasting, so that channels of broadcast programs received by the receiver 1 can be distinguished from the BS channel.

Each TS includes video/audio information in which comprehensive SI is multiplexed. The term "comprehensive SI" means the SI for all broadcasting stations, which includes program schedule information of all their channels. More concretely, the comprehensive SI is defined by common service information to all the broadcasting stations, and is transmitted in all the TSs of all the BS channels in the form of being multiplexed video/audio information. Thus, no matter which channel a viewer selects, the viewer can acquire the comprehensive SI included in any TS of the tuned channel, thereby EPG data for all the channels being produced. Specifically, the CPU 17 shown in FIG. 1 controls the demultiplexer 6 to acquire the comprehensive SI from the currently received TS, with EPG text data produced based on the acquired SI.

Each TS is shown in the lower part of FIG. 2, in which the data format of video/audio data multiplexed with the comprehensive SI. A maximum of 32 services, which can be transmitted in each TS, as described above, are multiplexed in a time division manner so as to form a plurality of packets in each TS. In the example shown in FIG. 2, the lowermost TS includes a plurality of services (services A, B, etc.) provided by a plurality of broadcast stations in the time-divisional multiplexing form. For example, to receive a service "A" requires the following procedures. First, the CPU 17 causes the tuner 4 in FIG. 1 to tune to a BS channel that includes a particular TS with the service "A." Responsively to this tuning, the demodulator 5 in FIG. 1 recognizes and the particular TS from a plurality of TSs contained in the tuned BS channel. The demultiplexer 6 then makes reference to information to identify the service "A" so that the service "A" multiplexed in the time divisional manner in the particular TS is finally extracted from the TSs.

In addition, as shown in FIG. 2, there is a particular TS that includes data of each service (indicated by references A, B, etc.) provided by a plurality of broadcasting stations, where a piece of individual SI precedes each service to describe thereof. The individual SI is created to have the similar information to the comprehensive SI, except that the individual SI includes information unique to each broadcasting station, which is removed from the comprehensive SI. In other words, a summary is that the comprehensive SI has information needed for displaying, as the EPG, a program list for all the BS channels, while the individual SI has more detailed information, such as an outline of each program. Each piece of the individual SI can be obtained with the CPU 17 in FIG. 1 in reply to an instruction issued by a user. This makes it possible to display outlined information about a specific program.

### (3) Day EPG

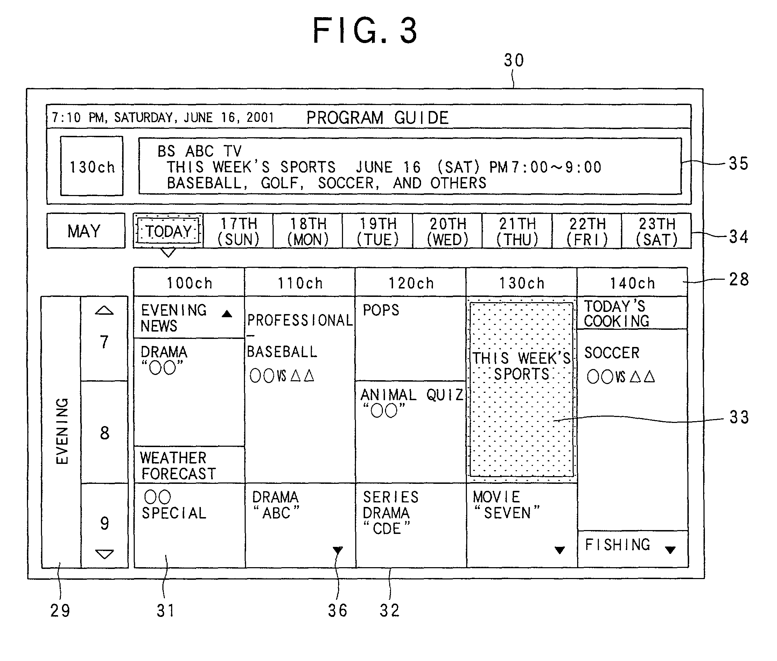

Referring to FIG. 3, an EPG display screen will now be described. FIG. 3 exemplifies the EPG display screen. This EPG display screen shows a program table for a plurality of BS channels on a day-of-the-week basis, and this program table will hereafter referred to as a "day EPG." EPGs other than the day EPG include a "genre EPG" used to display the programs genre by genre and an "area-display EPG" used to display the programs in wider regions. Of the two EPGs, the genre EPG has no particular relation to the present invention, so its explanation will be omitted, while the "area-display EPG" will be detailed later. Incidentally, the EPG display image can be widened up to the whole screen of the TV display or made smaller so as to be superimposed on a viewed program image.

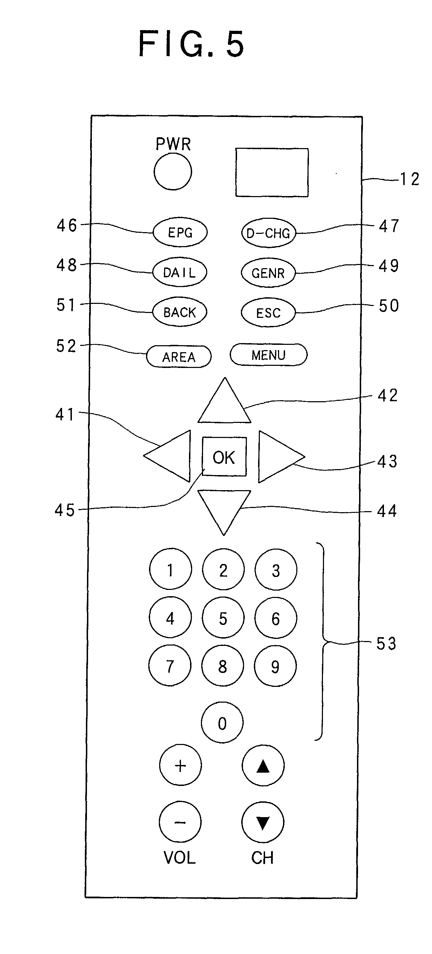

The day EPG 30 includes current date/time information to be displayed in its uppermost area. As shown in the FIG. 5, the day EPG 30 includes program tables for eight days counted from the current day to the same day of the next week. The day EPG 30 provides the program tables embracing all the channels for each day. When a user specifies a desired day from a day tab 34, a program table for that specified day appears on the screen. Every time the user presses a "day-change key" 47 (described below) embedded on the remote control 12, a program table for the next day appears. Pressing the key 47 after the program table indicating the seventh day has been displayed allows the program table to return to that indicating the current day.

The program table is displayed in a program-table grid 32 serving as the program-table display area, in which program cells 31 are arranged by partitioned by frames. A time display area 29 is located as a column next to the left of the program-table grid 32. FIG. 3 provides an example of the program table that lists programs to be broadcasted from 7 to 10 p.m. on June 16 (Sat.). A channel display area 28 is located in a row on the program-table grid 32.

A program highlighted by a cursor 33 (in FIG. 3, illustrated by a black frame) shows that a user has currently selected that program. In the example of FIG. 3, the cursor 33 selects "This week's sports." An outline of the currently selected program is displayed in an outlined information area 35 mapped in an upper part of the screen, as shown FIG. 3. The outlined information is created based on the comprehensive SI included in each of the foregoing TSs.

When the remote control 12 is operated to move the cursor 33 in the lateral direction in FIG. 3, a desired channel can be selected. Further, changes in the time zone on the program-table grid 32 are realized by operating the remote control 12 so that the cursor 33 is moved in the up- and-down direction in FIG. 3. These operations will be detailed later. When the cursor 33 is kept moving in the time axis direction (i.e., the up- and-down direction) over 12:00 p.m. on the program table, the day of the program table is automatically updated to the next day. That is, the program is updated to that for the next day, where the cursor 33 points to a certain program cell starting from 0:00 a.m. or later next day. Moreover, moving the cursor 33 over 12:00 p.m. on the seventh day (in the example shown in FIG. 3, 12:00 p.m. on June 23 (Sat.)) on the program table allows the day of the program table to return to "today." Thus an updated program table is provided, in which the cursor 33 points to a certain program cell starting from today's 0:00 a.m. or later. That is, the cursor 33 will return to a certain program cell on the oldest broadcast day that has programs.

The exemplified program table in FIG. 3 shows that programs for three hours are listed in its time-axis direction and programs for 5 channels are mapped in its channel-axis direction. However, the configuration of the program table is not limited to the above, but the program table may be configured in such a manner that, for example, more longer periods of time and/or more channels are displayed simultaneously on the same program-table grid 32.

In addition, a continuation mark 36 is given to some program cells 31. The continuation mark 36 means the continuation of each program cell to which the mark is given. When the broadcast time of a certain program cell is so long that it is beyond the program-table grid 32 currently displayed, the continuation mark 36 is added to the cell to show that the cell further continues in the time-axis direction. For instance, a movie "Seven" that starts at 9:00 p.m. on the 130-th channel (ch.) in FIG. 3 lasts for two hours, but the entire program cell cannot be displayed, because the time zone is limited to 10:00 p.m. in the program-table grid 32 shown in FIG. 3. Thus the continuation mark 36 is adopted to show the continuation lasting beyond 10:00 p.m. If the continuation mark 36 is placed upward in a program, it means that the time zone of the program lasts upwardly (up to an earlier time). By contrast, if the downward mark 36 is used, it means that the time zone of a marked program lasts downward (down to a later time).

Additionally, when a shorter-time program, which will continue for a period of time as short as for example 3 to 5 minutes, such as weather forecasts or news, is displayed in the program-table grid 32, the width of a program cell in the time-axis direction (i.e., the height of a program cell on the EPG display screen) becomes too short to put the characters of its program name in the cell. In such a case, a program cell is solely displayed in the program-table grid 32. In response to a user's selection of such a shorter-time program, the contents of the program is outlined in the outlined information area 35. This enables the user to easily confirm the contents of shorter-time programs.

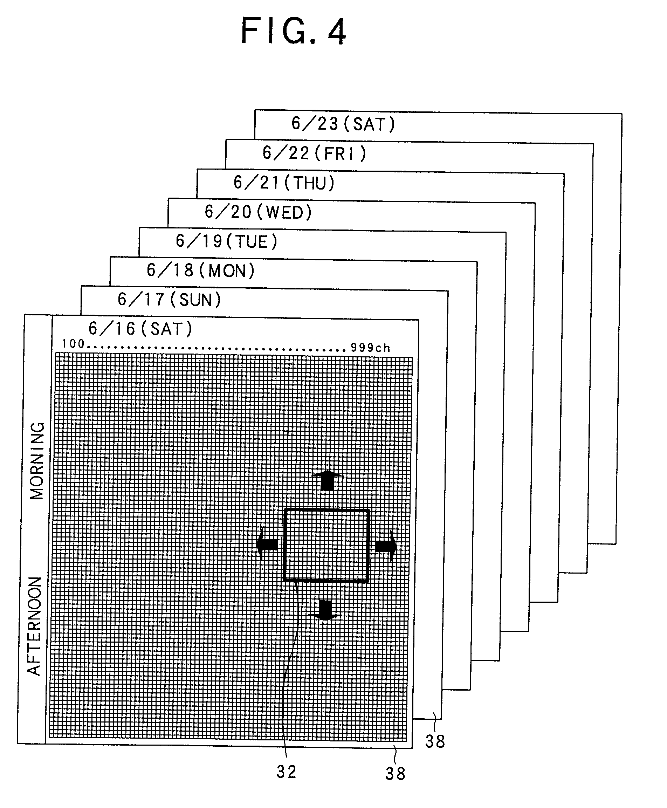

FIG. 4 shows a conceptual image of a data structure of several day EPGs. As described above, these "day EPGs" are composed of plural EPGs showing 8-day program tables, day by day, ranging from today to the same day of the next week. Practically, a single day sheet 38 is made from the programs for all the BS-channels on each day, and the day sheets 38 for 8 days are combined together. Accordingly, if the user specifies "today" in the day tab 34, the program table for the today comes up, as illustrated in FIG. 3. Alternatively, if the user specifies the "17-th day (Sun)" in the day tab 34, the program table for the 17-th day appears.

Only a single day sheet 38, which is depicted in FIG. 4, is partly displayed as the day EPG 30, as shown in FIG. 3. The day EPG 30 exemplified by FIG. 3 merely shows programs obtained at 7:10 p.m. on June 16 (Sat) and broadcasted from 7:00 to 10:00 p.m. by the 100-th to 140-th channels. In cases where a user operates the remote control 12 in such a manner that the cursor 33 is moved outside the currently displayed grid 32, the program-table grid 32 to be displayed is responsively moved, which is selected from the grids as shown in FIG. 4. Hence, at least one of time zones and channels are changed in the display of the day EPG 30.

FIG. 5 shows the appearance of the remote control 12, serving as the operation device, used together with the satellite digital broadcast receiver 1 according to the present invention. Of the function keys provided on the front of the remote control 12, an "EPG key" 46 is used to display the screen of an EPG, as shown in FIG. 3. When pressing the EPG key 46 while watching an ordinary TV program, images displayed on the screen of the display 22 switch over from the ordinary TV program to the EPG screen as shown in FIG. 3. An alternative display mode is that the EPG may be superimposed on the ordinary TV program. Pressing the EPG key 46 again during the display of an EPG will return to the ordinary TV program from the EPG presentation. A "day key" 48, which is located below the EPG key 46, is used to a day EPG as shown in FIG. 3. The EPG screen includes a genre EPG screen, in addition to the day EPG. The day key 48 is responsible for issuing the selection of a day EPG within the EPG screen.

Provided on the right of the EPG key 46 is a "day-change key" 47, which is used to change days in a program table that has been displayed. A "genre key 49" is located below the day-change key 47, and is used for switch over from an EPG screen to a genre EPG screen. An ESC key 50 is placed below the genre key 49, so that the key 50 is operated when returning from an EPG screen to an ordinary program screen. There is also provided a BACK key 51, which can be used when deleting the last input command. An "area key" 52 is placed below the BACK key 51, which is operated when displaying an area-display EPG, which will be descried later.

Additionally, cursor movement keys 81 to 84 are embedded almost in a central part of the remote control 12, and used for moving not only the position of the cursor 33 but also a program-table section under an area-moving EPG mode, which will be explained later. For example, during the display shown in FIG. 3, pressing a leftward arrow key 41 causes the cursor 33 to move to a left adjacent program cell, while pressing a rightward arrow key 43 causes the cursor 33 to move to a right adjacent program cell. In a similar manner to the above, when an upward arrow key 42 is pressed, the cursor 33 is moved upward on an EPG screen, whilst a downward arrow key 44 is pressed, the cursor 33 is moved downward on an EPG screen. A program-table section under the area-moving EPG mode, which will be detailed later, can also be moved by the use of the cursor movement keys.

By the way, if any one or more keys of the cursor movement keys 41 to 44 are simply operated to move the cursor 33 to a desired program on an EPG screen, the receiver 1 has yet to establish the selection of the program. Pressing an OK key 45 after a desired program was selected with the use of the cursor 33 allows the selected program to be confirmed finally by the receiver 1. By way of example, the EPG screen shown in FIG.3 depicts that the receiver 1 is under reception of a program "This week's sports" broadcasted by the 130-th ch. In this state, a user's pressing operation onto the leftward arrow key 41 is able to move the cursor 33 to a left program cell showing "Pops" within the program-table grid 32. However, the receiver 1 still remains in this stage so that it tunes to the program of "This week's sports." On pressing the OK key 45, the receiver 1 finally recognizes the switchover of the programs and operates to change its reception channel to the 120-th ch., resulting in that the program "Pops" is received and its reception images are displayed.

When a user uses both the cursor movement keys 41 to 44 and the OK key 45 so as to specify a program cell to be broadcasted later, not a program that has been broadcasted at present, a schedule screen will be displayed in the normal state. Thus, the user is able to follow instructions given on the schedule screen, so that the user can reserve the view and recording of the specified program. In cases where the SI has been updated in sequence to delete the past program information and a former (past) program cell that has been updated is specified, a message saying that the program was already broadcasted will be presented.

Moreover, as shown in FIG. 5, the ten keys 53 of "0 to 9," which are also included in the operation keys, are positioned below the cursor movement keys 41 to 44. The ten keys 53 are used for two purposes. One purpose is to specify a desired reception channel by operating the ten keys 53. The other is to specify a program-table section. More practically, with the EPG key 46 pressed, the area key 52 is pressed concurrently, the display mode is moved to an area-moving EPG mode. When one or more ten keys 53 are pressed under this area-moving EPG mode, program information indicative of a program-table section (channels and time zone) specified by any of the ten keys 53 is acquired from the RAM 16, and then displayed within the program-table grid 32. This may be modified into another configuration, where directly pressing the ten keys 53 while the EPG key 46 has been pressed allows the display to transfer to the area-moving EPG mode.

Incidentally, the other keys on the remote control 12 will not be described in detail, because they are used to receive ordinary TV programs and hence have no direct relation to the present invention.

### (4) Area-display EPG

The area-display EPG, which is an essential part of the present embodiment, will now be described. The area-display EPG can be expressed as a wide-range display version of the day EPG shown in FIG. 3, in which the day EPG is entirely or partly (but widely) displayed as one screen image. The reason why the area-display EPG is used is as follows. The range of a program table displayed by the day EPG shown in FIG. 3 is restricted by various factors, such as the screen size of a TV display, resolution, and the sizes of characters used to describe program information. The area-display EPG, which is established to compensate for the above restriction, is able to, compared to the day EPG, simply display a wide program range on its initial screen, and then to display in sequence narrower-range program tables in a developed manner.

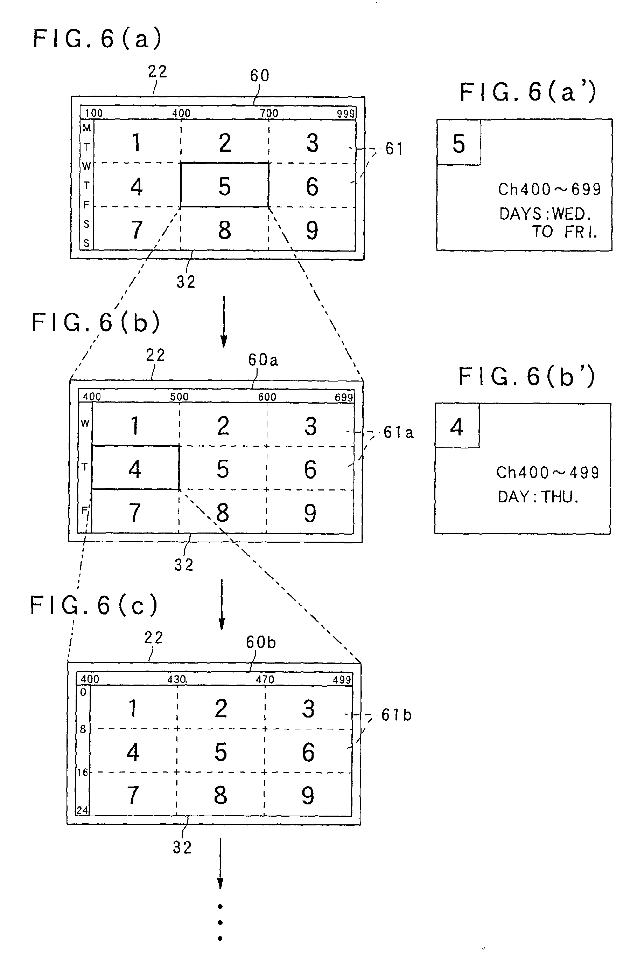

FIG. 6 exemplifies the screen of the area-display EPG. The area-display EPG is capable of displaying all the channels and all the days. But when such display is impossible due to some limitations resultant from a TV receiver used or other conditions, the displayable range based on the area-display EPG is a possible maximum range allowed under those conditions. In the case that the display of an area-display EPG is desired, a user is obliged to press the EPG key 46 of the remote control 12 shown in FIG. 5 while the an ordinary TV program is viewed, and then to press the area key 52 thereof. These operations enable the area-display EPG to be initiated. On the other hand, in cases where the display of the area-display EPG is followed by a user's pressing operation onto the area key 52 causes the TV display 22 to present the EPG image on its screen, as illustrated in FIG. 3. A further user's pressing operation onto the EPG key 46 returns to the displayed state of an ordinary TV program.

The area-display EPG 60 shown in FIG. 6(a) presents a program table, in which programs for all the days are arrayed in the time-axis direction and programs for 900 channels are arrayed in the channel-axis direction. This is one example of the area-display EPG, so the area-display EPG can be modified to have other sizes (areas).

Furthermore, the area-display EPG 60 includes the program-table grid 32, which is divided into 9 sections correspondingly to the locations of the 9 ten keys 53 on the remote control 12 used to operate the receiver 1, thus 9 program-table sections being displayed. The relative arrangement order of the program-table sections 61 arrayed within the program-table grid 32 agrees with that of coordinate positions of the ten keys 53 placed on the remote control 12. If any ten key 53 is pressed, the coordinate data of each ten key stored in the RAM 16 are looked up, resulting in that a particular program-table section 61 displayed in the program-table grid 32, which corresponds to the coordinates of a particular pressed ten key 53, is developed into new program-table sections 61a, ..., 61a. Repeating this operation allows the display to be developed in turn finer program-table sections 61b, ..., 61b.

To be specific, while an ordinary TV program is viewed, the EPG key 46 of the remote control 12 is pressed and the area key 52 thereof is pressed, so that the area-display EPG 60 shown in FIG. 6(a) appears as an initial image on the TV display 22. This area-display EPG 60 has the program-table grid 32 divided into 9 sections in a matrix correspondingly to the locations of the ten keys 53. That is, the programs for all the days are grouped into three sections in the time-axis direction, while the programs for 900 channels are grouped into the three sections in the channel-axis direction.

For instance, in the program-table sections 61 illustrated in FIG. 6(a), the three sections "1, 2 and 3" arrayed along the first row in the time-axis direction present programs to be broadcasted on Monday and Tuesday. Likewise, the three sections "4, 5 and 6" arrayed along the second row present programs to be broadcasted on Wednesday to Friday. Further, the three sections "7, 8 and 9" arrayed along the third row present programs to be broadcasted on Saturday and Sunday. In the channel-axis direction, the three sections "1, 4 and 7" arrayed along the first column present programs to be broadcasted on the 100-th to 399-th channels. Like this, the three sections "2, 5 and 8" arrayed along the second column present programs to be broadcasted on the 400-th to 699-th channels. The three sections "3, 6 and 9" arrayed along the third column present programs to be broadcasted on the 700-th to 999-th channels.

The area-display EPG 60 shown in FIG. 6(a) exemplifies the section "5" of the program-table section 61, which is realized in response to a user's pressing operation onto the key "5" of the ten keys 53 of the remote control 12. On selecting the section "5," a black frame is placed around the section "5," in parallel with an additional display of information, such as a broadcast date or a start time and each broadcast channel, which is to be displayed in the next area-display EPG 60a. Such additional information is present in the outlined information area 35 (not shown in FIG. 6) located above the area-display EPG 60, which is exemplified in FIG. 6(a'). The display mode is not limited to the above one, but may be provided within the program-table grid 32 in a pop-up display manner. The pop-up display manner uses a pop-up screen to display outlined information about a particular program-table section 61 subjected to selection, while the area-display EPG is displayed.

The selection and determination of the section "5" from the program-table sections 61 allows the sections 61 to be developed into the next new area-display area 60a shown in FIG. 6(b). The area-display area 60a, which provides programs covering not only the 400-th to 699-th broadcast channels but also the broadcast days of Wednesday to Friday, includes the program-table grid 32 divided into 9 sections in a matrix correspondingly to the locations of the ten keys 53. That is, the programs for Wednesday to Friday are grouped into three sections in the time-axis direction, while the programs for the 400-th to 699-th channels are grouped into three sections in the channel-axis direction.

For instance, in the program-table sections 61a illustrated in FIG. 6(b), the three sections "1, 2 and 3" arrayed along the first row in the time-axis direction present programs to be broadcasted on Wednesday. Likewise, the three sections "4, 5 and 6" arrayed along the second row present programs to be broadcasted on Thursday. Further, the three sections "7, 8 and 9" arrayed along the third row present programs to be broadcasted on Friday. In the channel-axis direction, the three sections "1, 4 and 7" of the program-table section 61a arrayed along the first column present programs to be broadcasted on the 400-th to 499-th channels. Like this, the three sections "2, 5 and 8" arrayed. along the second column present programs to be broadcasted on the 500-th to 599-th channels. The three sections "3, 6 and 9" arrayed along the third column present programs to be broadcasted on the 600-th to 699-th channels. It is always unnecessary that the divided sections are precisely even as shown in FIG. 6, but the area may be divided in a partly overlapped fashion. Users select a desired section with ease.

The area-display EPG 60a shown in FIG. 6(b) exemplifies the section "4" of the program-table section 61a, which is realized in response to a user's pressing operation onto the key "4" of the ten keys 53 of the remote control 12. On selecting the section "4," a black frame is placed around the section "4," in parallel with an additional display of information, such as a broadcast date (e.g., Thursday) and broadcast channels (e.g., the 400-th to 499-th channels), which is to be displayed in the next area-display EPG 60b. Such additional information is present in the outlined information area 35 (not shown in FIG. 6) located above the area-display EPG 60a, which is exemplified in FIG. 6(b').

The area-display area 60b, which provides programs covering not only the 400-th to 499-th broadcast channels but also the broadcast day of Thursday, includes the program-table grid 32 divided into 9 sections in a matrix correspondingly to the locations of the ten keys 53, as shown in FIG. 6(c). That is, the programs for 24 hours on Wednesday are grouped into three sections in the time-axis direction, while the programs for the 400-th to 499-th channels are grouped into three sections in the channel-axis direction.

Both of the area-display EPGs 60a and 60b shown in FIGs. 6(b) and 6(c) may be displayed on the area-display EPG 60 in a sequential superposition manner. A further modification may be provided such that, in cases where the number of each program-table section 61, 61a or 61b is selected by mistake in each area-display EPG 60, 60a or 60b and entered for display, such mistaken selection is recovered by operating the cursor movement keys 41 to 44 to move adequately each program-table section 61, 61a or 61b.

As described above, a user is allowed to operate the EPG key 46 while the user views an ordinary TV program, before operating the area key 52. Responsively to these operations, the 9 program-table sections 61 are displayed in a divided form in the program-table grid 32 of the area-display EPG 60. The 9 divided sections 61 are made to agree with the locations of the ten keys 53 on the remote control 12.

In reply to a user's pressing operation onto any ten key 53, the coordinate data stored in the RAM 16 are checked. The checked results are reflected into the developed display to the program-table sections 61a and 61b, which are carried out in a sequential manner according to coordinates obtained through user's repeated pressing operations onto the ten keys 53. Hence the user can be given the function to selectively operate a desired key from the ten keys 53, so that the user is able to efficiently search for a desired program from a program table having a great deal of programs.

### (5) Display processing of area-display EPG

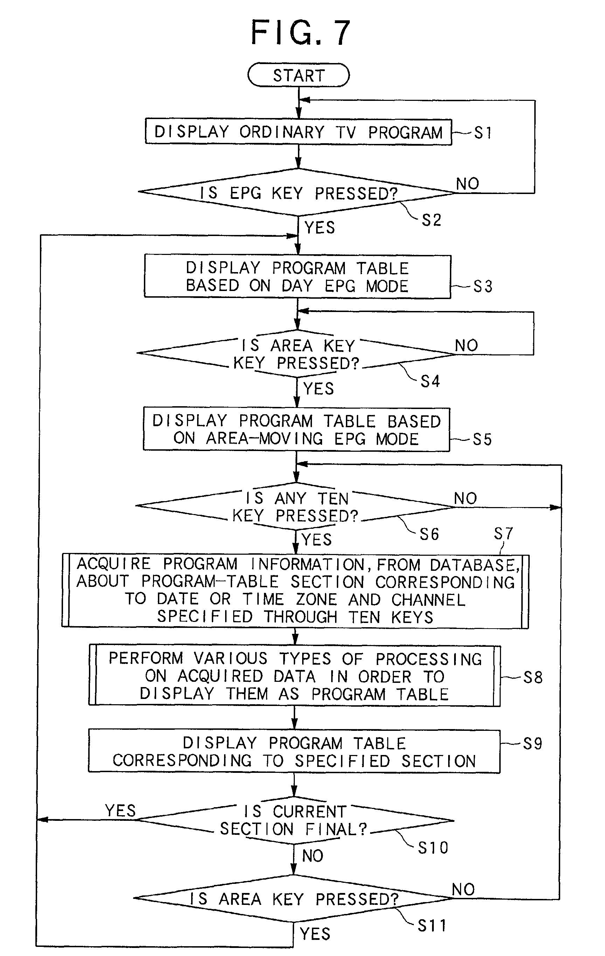

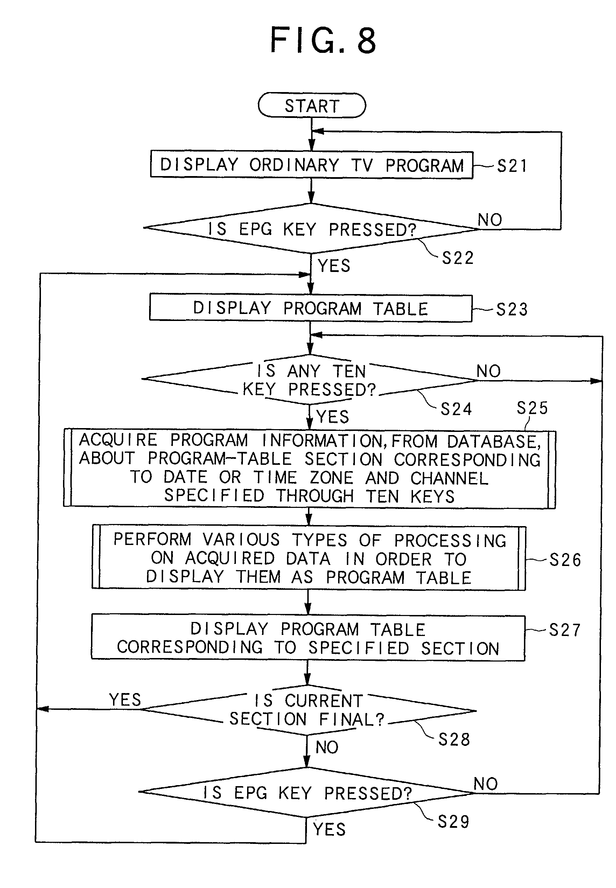

Referring to the flowcharts shown in FIGs. 7 and 8, display processing for the area-display EPG will now be described. FIG. 7 illustrates a flowchart that represents processing for switchovers carried out, in response to operations onto the remote control 12, between the area-moving EPG mode and the ordinary day EPG mode which are prepared differently from each other. FIG. 8 shows a flowchart that represents processing for display of the area-display EPG, in which the area-moving EPG mode is mixed with the ordinary day EPG mode, with the switchover processing unnecessary. In addition, the following processing is conducted in such a manner that, in FIG. 1, the CPU performs a program read out from the ROM 15 so as to control the constituents such as the display processor 9, as the data memorized by the RAM 16 are used.

As shown in FIG. 7, suppose that the receiver 1 provides a user with an ordinary TV program (step S1). The CPU determines 17 whether or not the EPG key 46 of the remote control 46 has been pressed (step S2). If it is determined that the EPG key 46 has not been operated, the display of the ordinary TV program continues. In contrast, it is determined that the EPG key 46 has been pressed, the CPU makes reference to the RAM 16 to acquire display data for a day EPG, before entering the day EPG mode (step S3).

The CPU 17 then determines if or not the area key 52 is pressed on the remote control 12 (step S4). When the determination is negative, that is, no pressing operation has yet to be done, the day EPG mode is continued. In contrast, if the determination reveals that such pressing operation has been done, the mode is transferred to the area-moving EPG mode (step S5). Under the area-moving EPG mode, the area-display EPG 60 is displayed as shown in FIG. 6(a). The EPG 60 includes the program-table grid 32 (i.e., program-table display area) divided into 9 sections in the one-by-one correspondence to the located positions of the ten keys arranged on the remote control 12 to operate the receiver 1. Hence the 9 divided program-table sections 61 are displayed.

Then, the CPU 17 determines whether any of the ten keys 53 has been pressed or not (step S6). When it is determined that any key of the ten keys 53 has been pressed, the coordinate data preserved in the RAM 16 are examined. And the examined results are used to display, in a developed manner, a further program-table sections 61a in accordance with coordinates corresponding to the position of a particular ten key 53 that has been pressed. To realize this display, pieces of program information about the particular program-table section 61a in compliance with the day or time zone and the channel specified by any of the ten keys 53 are acquired from the database preserved by the RAM 16 and others (step S7).

If the selected BS channel is a channel based on a BS digital broadcast that has been aired in Japan, the SI (service information indicative of scheduled programs) to be aired includes the channel number of each program, the date and time to start each program, and the duration of each program. Thus, this SI is used to select program information in agreement with the date or time zone and the channel specified through the ten keys 53.

The data acquired at step S7, that is, the date or time zone and the channel specified through the ten keys 53, are then subjected to various types of data processing to display them as a program table (step S8). The resultant program table is then displayed (step S9). It is then determined if the current program-table section is a finally divided section or not (step S10). When this determination is true, that is, the current program-table section is a finally divided one, the current section is displayed in the mode of an ordinary day EPG, as shown in FIG. 3. This display is initially executed with the cursor 33 placed at, for example, a program located at the left uppermost section, and then the processing is returned to step S3. It is therefore possible for a user to perform ordinary day-EPG operations toward the displayed program table. By contrast, if it is determined at step S10 that this determination is false, that is, the current program-table section is not a finally divided one, the processing proceeds to step S11.

At step S11, it is determined whether or not the area key 52 of the remote control 12 has been pressed. When such a pressing operation has not been done, the processing is made to return to step S6. However, there has been such a pressing operation, the processing is returned to step S3, where the display mode switches over to the day EPG mode. In addition, though the processing is returned from step S11 to step S3 due to the fact that the area key 52 has been pressed, this returning is caused when a user is desired to stop the operations based on the area-moving EPG mode in the course of their operations. When such a return has been made, a program table that includes a cell showing a currently viewing program, that is, the program table including both of a particular time zone of "today" and a particular channel that had been viewed.

Referring to FIG. 8, the EPG display processing will now be explained, in which the area-moving EPG mode is not distinguished from the day EPG mode so that it is unnecessary to perform switchovers from one mode to the other.

As shown in FIG. 8, suppose that the receiver 1 provides a user with an ordinary TV program (step S21). The CPU determines 17 whether or not the EPG key 46 of the remote control 46 has been pressed (step S22). If it is determined that the EPG key 46 has not been operated, the display of the ordinary TV program continues. In contrast, it is determined that the EPG key 46 has been pressed, the CPU makes reference to the RAM 16 to acquire display data for a day EPG (step S23).

Then, the CPU 17 determines if the any of the ten keys 53 on the remote control 12 has been pressed or not (step S24). When the determination shows that any ten key 53 has been pressed, the coordinate data store in the RAM 16 have been checked, and on the basis of the checked results, a program-table section 61a of which coordinates correspond to a pressed particular ten key 53 is displayed in a developed manner. To realize this display, pieces of program information about the particular program-table section 61a in compliance with the day or time zone and the channel specified by any of the ten keys 53 are acquired from the database preserved by the RAM 16 and others (step S25).

The data acquired at step S25, that is, the date or time zone and the channel specified through the ten keys 53, are then subjected to various types of data processing to display them as a program table (step S26). The resultant program table is then displayed (step S27).

It is then determined if the current program-table section is a finally divided section or not (step S28). When this determination shows that the current program-table section is a finally divided one, the processing is returned to step S23, while the determination shows the opposite to the above, that is, not a final one, the processing goes to step S29.

It is further determined at step S29 whether or not the EPG key 46 on the remote control 12 has been pressed or not. In reply to the determination that the EPG key 46 has yet to be pressed, the processing is returned to step S24. But, when the determination that the EPG key 46 has been pressed comes out, the processing is forced to return to step S21, where the TV display presents an ordinary TV program.

As described above, the present embodiment is able to provide the program-table sections 61, as shown in (a) and (a') of FIG. 6, of which display order in the program-display grind 32 agrees with that of the ten keys 13 on the remote control 12. Hence it is easier for users to visually recognize a one-to-one correspondence between the spatially arranged positions of the ten keys 53 and the arrangement of the program-table sections displayed in the program-table grid 32. Accordingly, the maneuverability for selecting a desired program can be improved greatly.

Further, the present embodiment enables the program-table sections 61 to be developed and displayed into more detailed program-table sections 61a (61b, ...) in sequence responsively to each user's pressing operation onto the ten keys 53. Hence, the user can start the search of a desired program from a program table that widely covers a variety of programs, which improves the efficiency of user's selecting operations for desired programs.

In displaying the program-table sections 61 sequentially in a developed manner, pieces of information indicative of at least broadcast dates or start time, and broadcast channels that appear in more detailed program-table sections 61a (61b, ...), which are scheduled to be developed next, are displayed previously. Thus, this way of previous displaying the minimum information allows the user to select a desired program-table section next with steadiness and without fail. In addition, in displaying the program-table sections 61 sequentially in a developed manner, it is possible for users to recognize more detailed program-table sections 61a (61b, ...) within the program-table grid 32. Accordingly, the user is able to see the more detailed program-table sections 61a (61b, ...) in a securely recognized way. Moreover, the numbers of the ten keys 53 are added to each set of the program-table sections 61, 61a, 61b, ...in such a manner that an order of the numbers of the ten keys 13 are conceptually equal to that of each set of the sections. This addition of the numbers greatly helps users recognize the numbers assigned to the sections which is currently under display.

Furthermore, the present embodiment adopts the remote control 12 used as the operation device and the ten keys 53 used as the operation keys. Thus, the operations for selecting a desired program are made simple, while still providing sophisticated usage.

### (6) Other area-display EPGs

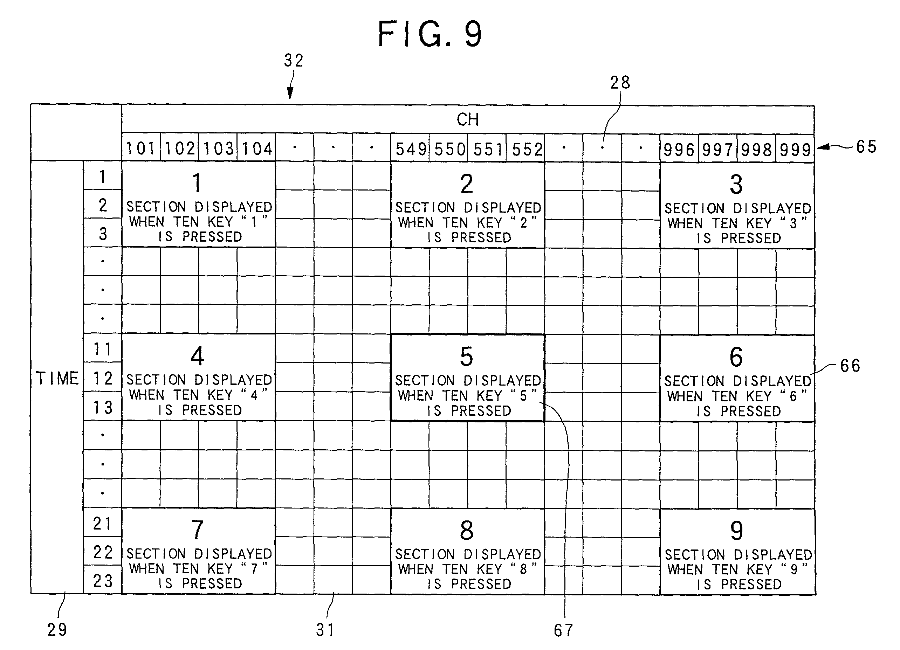

Referring to FIG. 9, other embodiments of the present invention will now be described. FIG. 9 exemplifies the display screen of another area-display EPG. As shown therein, the program-table grid 32 includes a great deal of program cells 31 partitioned by frames, thus providing an area-display EPG. The program-table grid 32 includes, at its left portion, a time display area 29 and includes, at its top portion, a channel display area 28 so that it extends in the lateral direction. The program cells 31 of the area-display EPG 65 provide programs two-dimensionally mapped in the time axis direction and the channel axis direction. A zone of hours in the time axis direction extends through 24 hours, while a multitude of channels in the channel axis direction covers the 101-th to 999-th channels. This configuration is just one example, so the grid 32 may be modified into grids having other sizes (sections).

Within the program-table grid 32 providing one type of area-display EPG 65, nine program-table sections 66 are arranged similarly to the ten keys 53 on the remote control 12, with respect to both the arranged positions of the keys and the number of keys. The nine program-table sections 66 are displayed in the program-table grid 32 in a scattered manner. Like the foregoing program-table sections, these program-table sections 66 are thus mapped within the grid 32 so that an arrangement order of coordinate positions of the sections 66 relatively agrees with the arrangement order of the ten keys 53 on the remote control 12.

When the EPG key 46 is pressed on the remote control 12 (refer to FIG. 5) with a TV program viewed before pressing the area key 52, the area-display EPG 65 shown in FIG. 9 will come up on the TV display 22.

In the time axis direction of the area-display EPG 65, Nos. "1, 2 and 3" of the program-table sections 66 are assigned to a period of time of 0:00 to 2:00 o'clock, Nos. "4, 5 and 6" thereof are assigned to a period of time of 11:00 to 13:00 o'clock, and Nos. "7, 8 and 9" thereof are assigned to a period of time of 21:00 to 23:00 o'clock. Meanwhile, in the channel axis direction of the area-display EPG 65, Nos. "1, 4 and 7" of the program-table sections 66 are assigned to a range of the 101-th to 104-th channels, Nos. "2, 5 and 8" thereof are assigned to a range of the 549-th to 552-th channels, and Nos. "3, 6 and 9" thereof are assigned to a range of the 996-th to 999-th channels.

This area-display EPG 65 is operated on the area-moving EPG mode as follows. When the EPG 65 starts to be displayed, an area-display cursor 67 is displayed in the programs of the EPG 65. More concretely, responsively to selecting a desired program-table section 66 through a pressing operation onto any of the ten keys 53, the area-display cursor 67 is displayed as a black frame surrounding the selected desired program-table section 66. In FIG. 9, exemplified is the "5"-numbered program-table section 6 which has been subject to the selection.

Under the area-moving EPG mode, the area-display cursor 67 can be moved up or down, or right or left in the program-table grid 32. Practically, pressing either one of the cursor movement keys 41 to 44 of the remote control 12 permits the area-display cursor 67 to be moved in a specified direction by a specified amount of length.

Accordingly, a user is able to press the EPG key 46 of the remote control 12 before pressing the area key 52 thereof, so that the area-display EPG 65 shown in FIG. 9 is represented on the TV display 22. Pressing any of the ten keys 53 on the remote control 12 makes it possible to select a desired program-table section 66, which results in that the area-display cursor 67 is displayed on the selected section 66. In a similar way to the operations for the day EPG ordinarily displayed, a user is able to move the area-display cursor 67. Therefore the user is able to easily search for a section including a desired program.

An alternative configuration may be applied to the above area-display EPG 65. The above area-display EPG 65 has been formed such that the time display area 29 represents a period of time for 24 hours. Instead, the time display area 29 may be formed to represent all the days (for 8 days). And it may be configured such that if the number "1" of the ten keys 13 is pressed, the head channel of a viewing time zone on the first display day is displayed; if the number "5" of the ten keys 13 is pressed, the middle channels of a middle viewing time zone (for example, 11:00 to 14:00 o'clock) on the middle day is displayed; and if the number "9" of the ten keys 13 is pressed, the tail channels of a last viewing time zone (for example, 21:00 to 23:00 o'clock) on the last display day is displayed.

In the case of the BS digital broadcast, the last display day differs depending on types of service (such as television service, radio service, or data service), because, in the BS digital broadcast, the number of days on which information is sent out is transmitted as data, and a default of the comprehensive SI is 8 days for television service, 3 days for radio service, and 2 days for data service.

As described, under the area-moving EPG mode, any of the ten keys 53 of the remote control 12 can be pressed to select a particular program-table section 66 and the area-display cursor 67 can be moved to search a desired program from a wide range of programs mapped in a program table in an efficient manner.

The present invention is not limited to the above embodiments, but may be modified into various other forms. For example, the above embodiments have used the remote control 12 as the operation device, but the operation device may be a portable terminal with a transmission function. In addition, in the foregoing embodiments, the ten keys 53 have been embedded on the remote control 12 as shown in FIG. 12, this can also be modified into another form, where numeral keys of 1 to 12 may be arranged in a matrix, such as 3-pieces in the row x 4-pieces in the column or 4-pieces in the row x 3-pieces in the column. If such a matrix configuration is adopted, it is enough that coordinate data of sections in the program-table grid 32, which are divided according to the arrangement positions of the numeral keys, are stored in the RAM 16.

Moreover, the keys usable in the foregoing embodiments are not always confined to the numeral keys. Alternative symbols on the keys may be for example characters or graphics, as long as they can be distinguished from each other. There is a modification about the processing explained according to FIG. 6. If the BACK key 51 on the remote control 12 is pressed, the processing may be performed so that the display goes back to an immediately-before program-table section.

The present invention may be embodied in other specific forms without departing from the spirit or essential characteristics thereof. The above embodiments are therefore to be considered in all respects as illustrative and not restrictive, the scope of the present invention being indicated by the appended claims rather than by the foregoing description and all changes which come within the meaning and range of equivalency of the claims are therefore intended to be embraced therein.

## Claims

1. An apparatus for displaying an electronic program guide, in which information about a plurality of programs is displayed as a program table having both a time axis and a channel axis along which the information is mapped two-dimensionally, **characterized in that** the apparatus comprising:
a program information acquiring device (17) for acquiring program information including at least information about program names, start time instants, program lengths or end time instants, broadcast channels, and broadcast days of the plurality of programs;
a storing device (17, 16) for storing therein coordinates of a plurality of program-table sections (61) formed by dividing a program-table display area (32) in accordance with positions of a plurality of operation keys (53) arranged on an operation device (12) to operate a receiver (1) ; and
a display device (17, 9, 22) for displaying, when a certain one of the operation keys (53) is operated, a certain program-table section selected from the plurality of program-table sections (61) in response to coordinates of a certain program-table display area corresponding to the certain operation key by making reference to the coordinates stored in the storing device (17, 16).

2. The apparatus according to claim 1, **characterized in that** the operation device (12) is a remote control and the operation keys (53) are numeral keys.

3. The apparatus according to either one of claims 1 or 2, **characterized in that** the display device (17, 9, 22) is configured such that a relative arrangement order of the numeral keys arranged on the remote control agrees with a relative arrangement order of coordinate positions of the program-table sections (61).

4. The apparatus according to claim 3, **characterized in that** the display device (17, 9, 22) is configured to develop and display in sequence a certain program-table section located at coordinates of a certain program-table display area corresponding to a certain numeral key whatever the certain numeral key is pressed.

5. The apparatus according to claim 4, **characterized in that** the display device (17, 9, 22) is configured to display in advance information about at least the broadcast day or start time instant and a broadcast channel of a certain program-table section to be displayed next, in cases where the program-table sections (61) are developed and displayed in sequence.

6. The apparatus according to claim 4, **characterized in that** the display device (17, 9, 22) is configured to distinguishably display, on the program-table display area, a certain program-table section to be displayed next, in cases where the program-table sections (61) are developed and displayed in sequence.

7. The apparatus according to any one of claims 3 to 6, **characterized in that** the numbers of the numeral keys corresponding to the arrangement order of the program-table sections (61) are displayed in the program-table display area (32).

8. A method of displaying an electronic program guide, in which information about a plurality of programs is displayed as a program table having both a time axis and a channel axis along which the information is mapped two-dimensionally, **characterized in that** the method comprising the steps of:
acquiring program information including at least information about program names, start time instants, program lengths or end time instants, broadcast channels, and broadcast days of the plurality of programs;
preserving coordinates of a plurality of program-table sections (61) formed by dividing a program-table display area (32) in accordance with positions of a plurality of operation keys (53) arranged on an operation device (12) to operate a receiver (1) ; and
displaying, when a certain one of the operation keys (53) is operated, a certain program-table section selected from the plurality of program-table sections (61) in response to coordinates of a certain program-table display area corresponding to the certain operation key by making reference to the coordinates preserved.
